# EUROPÄISCHE PATENTSCHRIFT

(11) **EP 3 738 007 B1**
(45) Veröffentlichungstag und Bekanntmachung des Hinweises auf die Patenterteilung: **27.03.2024**
(21) Anmeldenummer: 19710303.9
(22) Anmeldetag: 25.02.2019
(51) Int. Cl.: G05B 19/042

(54) **AUTOMATISCHES KONFIGURATIONSSYSTEM FÜR EIN WAHRNEHMUNGSSYSTEM, VERFAHREN ZUM BETREIBEN EINES AUTOMATISCHEN KONFIGURATIONSSYSTEMS, AUTONOMES SYSTEM MIT EINEM WAHRNEHMUNGSSYSTEM SOWIE COMPUTERPROGRAMMPRODUKT**
AUTOMATIC CONFIGURATION SYSTEM FOR A DETECTION SYSTEM, METHOD FOR OPERATING AN AUTOMATIC CONFIGURATION SYSTEM, AUTONOMOUS SYSTEM HAVING A DETECTION SYSTEM AND COMPUTER PROGRAM PRODUCT
SYSTÈME DE CONFIGURATION AUTOMATIQUE D'UN SYSTÈME DE PERCEPTION, PROCÉDÉ DE FONCTIONNEMENT D'UN SYSTÈME DE CONFIGURATION AUTOMATIQUE, SYSTÈME AUTONOME COMPORTANT UN SYSTÈME DE PERCEPTION, ET PRODUIT PROGRAMME INFORMATIQUE

(30) Priorität: 01.03.2018 DE 102018203082
(43) Veröffentlichungstag der Anmeldung: 18.11.2020
(73) Patentinhaber: Siemens Aktiengesellschaft, 80333 München (DE)
(72) Erfinder: ALBRECHT, Sebastian, 85399 Hallbergmoos (DE); DIETRICH, Vincent, 80639 München (DE); FEITEN, Wendelin, 85579 Neubiberg (DE); FIEGERT, Michael, 81739 München (DE); KAST, Bernd, 89335 Ichenhausen (DE); SCHMITT, Philipp Sebastian, 81735 München (DE)
(74) Vertreter: Siemens Patent Attorneys
(86) Internationale Anmeldenummer: PCT/EP2019/054615
(87) Internationale Veröffentlichungsnummer: WO 2019/166370

(56) Entgegenhaltungen:
- WO-A1-2017/028931
- DE-A1-102009 053 509
- DE-A1-102016 008 218

## Beschreibung

Die vorliegende Erfindung betrifft ein automatisches Konfigurationssystem für ein Wahrnehmungssystem, ein Verfahren zum Betreiben eines solchen automatischen Konfigurationssystems, ein autonomes System mit einem Wahrnehmungssystem aufweisend ein solches automatisches Konfigurationssystem und ein Computerprogrammprodukt.

Herkömmliche Automationssysteme oder Vorrichtungen mit autonomen Funktionen sind darauf angewiesen, ihr Umfeld permanent zu beobachten, um Situationen zu erkennen und beispielsweise richtig zu reagieren. Dies gilt umso mehr, je vielfältiger das Umfeld ist. Beispielsweise ist das Umfeld bei einem Industrieroboter, der in einer abgeschotteten Produktionsanlage steht, wenig vielfältig und die Wahrnehmungsaufgabe kann relativ einfach gelöst werden. Bei einem autonomen Fahrzeug, das sich im öffentlichen Straßenverkehr bewegt, ist das Umfeld sehr viel komplexer. Hier ist ein großer Aufwand zu treiben, um alle Eventualitäten zu berücksichtigen.

Bekannte Automationssysteme verwenden hierfür ein Wahrnehmungssystem, dessen Funktionen von Ingenieuren designt und individuell zusammengestellt wurden. Dies ist ein großer Aufwand, selbst wenn man berücksichtigt, dass einzelne Bausteine in verschiedenen Wahrnehmungssystemen wiederverwendet werden können. Ferner kann ein solches Wahrnehmungssystem ausschließlich in den von den Ingenieuren vorgesehenen festgelegten Routinen arbeiten. Ein dynamisches Anpassen über diese starren, vorgegebenen Aktionsmuster ist nicht vorgesehen und auch gar nicht möglich.

DE 10 2009 053 509 A1 beschreibt ein Verfahren zum simulativen Ermitteln von Messeigenschaften eines an einem virtuell modellierten Kraftfahrzeug angeordneten virtuell modellierten Sensors.

WO 2017/028931 A1 beschreibt ein Verfahren zur automatisierten, dynamischen und modellbasierten Generierung und Ausführung von Schaltsequenzen für Standby-Zustände in komplexen Anlagen. Es kann erforderlich sein, Produktionsanlagen insgesamt oder in Teilen vorübergehend in einen Standby-Zustand zur Energieeinsparung zu versetzen. Produktionsanlagen bestehen aus einer Vielzahl von verschiedenen Komponenten, welche gegebenenfalls noch zu Aggregaten zusammengefasst sein und logisch voneinander abhängig sein können. Dabei gilt: Als "Standby" wird ein Gerätezustand bezeichnet, in dem mindestens eine Funktion, aber nicht die Hauptfunktion erfüllt wird, bei dem ein deutlich verminderter Energieverbrauch herrscht und die Hauptfunktion jederzeit wieder vorbedingungslos aktiviert werden kann. Das Aktivieren und Verlassen von Standby-Zuständen sind allerdings nicht unverzüglich möglich, sondern benötigt eine gewisse Vorlauf-Zeit.

Vor diesem Hintergrund besteht eine Aufgabe der vorliegenden Erfindung darin, ein automatisches Konfigurationssystem für ein Wahrnehmungssystem bereitzustellen, mit dem das Wahrnehmungssystem automatisch konfiguriert werden kann.

Gemäß einem ersten Aspekt wird ein automatisches Konfigurationssystem gemäß dem Anspruch 1 vorgeschlagen.

Das automatische Konfigurationssystem ist insbesondere für eine virtuelle Planung der zum Erreichen eines bestimmten Wahrnehmungsziels notwendigen Aktionen eingerichtet. Vorteilhaft umfasst das automatische Konfigurationssystem hierfür die volle Flexibilität und ist dazu eingerichtet, die Aktionssequenzen dynamisch zu planen. Das Konfigurationssystem weist daher insbesondere die folgenden Vorteile auf.

Das Konfigurationssystem weist insbesondere eine durchgängige Repräsentation aller möglichen Aktionen des Wahrnehmungssystems auf. Dies umfasst insbesondere eine Datensammlung mittels Sensoren, eine Datenverknüpfung unterschiedlicher Sensoren und eine Auswertung der erfassten und/oder verknüpften Daten. Dabei kann das Wahrnehmungssystem tatsächlich implementiert sein, beispielsweise als Teil eines autonomen Systems, oder aber rein virtuell vorliegen. Die möglichen Aktionen des Wahrnehmungssystems sind in beiden Fällen beispielsweise als simulierbare Modelle in dem automatischen Konfigurationssystem enthalten.

Das Konfigurationssystem ist in der Lage, sich selbst zu trainieren, beispielsweise eine Genauigkeit eines Sensors mittels einer Auswertung einer Streuung von mit dem Sensor erfassten Daten zu ermitteln. Ferner kann das Konfigurationssystem in bestimmten Situationen, die durch den aktuellen Zustand des Weltmodells gegeben sind, gewisse Aktionssequenzen anderen vorziehen, da es aus früheren ähnlichen Situationen gelernt hat, welche Aktionssequenzen zu einem schnelleren und/oder besseren Erreichen des Wahrnehmungsziels führen können.

Das automatische Konfigurationssystem ist insbesondere vorteilhaft in der Lage, eine Wahrnehmungsaufgabe schneller, mit geringerem Energieverbrauch und/oder mit einem geringerem Datentransfer zu lösen. Das automatische Konfigurationssystem kann daher insgesamt als effizienter im Vergleich zu herkömmlichen Konfigurationssystemen bezeichnet werden.

Das automatische Konfigurationssystem kann insbesondere selbst entscheiden, wann und/oder wozu es Daten, insbesondere Sensordaten, erfasst, verknüpft, speichert, auswertet und so weiter. Auf diese Weise ist das Konfigurationssystem dazu eingerichtet, selbstständig mit den vorhandenen Ressourcen effizient und zielführend umzugehen.

Weiterhin kann das automatische Konfigurationssystem mit nur minimalem Aufwand an neue Aufgaben angepasst werden, da es elementare Bausteine verwendet, die flexibel miteinander kombinierbar sind.

Das automatische Konfigurationssystem ist insbesondere als eine Datenverarbeitungsvorrichtung ausgebildet. Die jeweilige Einheit des Konfigurationssystems, zum Beispiel die Modellierungseinheit oder die Planungseinheit, kann hardwaretechnisch und/oder auch softwaretechnisch implementiert sein. Bei einer hardwaretechnischen Implementierung kann die jeweilige Einheit zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Modellierungseinheit ist dazu eingerichtet, ein Weltmodell bereitzustellen. Das Weltmodell umfasst insbesondere eine Beschreibung des Wahrnehmungssystems sowie des räumlichen Bereichs und der darin angeordneten Objekte oder Gegenstände, in welchem das Wahrnehmungssystem angeordnet ist. Für reine Simulationszwecke, das heißt wenn das automatische Konfigurationssystem nicht mit einem Wahrnehmungssystem verbunden ist, können ein virtuelles Wahrnehmungssystem und ein virtueller Bereich in dem Weltmodell enthalten sein. Die Beschreibung des Weltmodells umfasst insbesondere ein semantisches Datenmodell. Ein semantisches Datenmodell umfasst insbesondere Konzepte und Aktionen. Ein Konzept beschreibt beispielsweise die Eigenschaften eines Sensors des Wahrnehmungssystems, eines Objekts und/oder der Umgebung. Eine Aktion ist insbesondere ein Modell einer elementaren Aktion, wie beispielsweise eine Datenerfassung mit einem Sensor. Das Modell der Aktion umfasst dabei insbesondere Eingangs- und Ausgangsparameter der Aktion sowie eine Implementierung der Aktion. Die Implementierung dient dabei zur Ausführung der Aktion, sei es mittels Simulation oder in der Realität. Bei einer simulierten Ausführung simuliert die Simulationseinheit die entsprechende Aktion, beispielsweise generiert die Simulationseinheit hierfür Sensordaten für eine Aktion, die einer Erfassung von Sensordaten entspricht.

Unter Sensordaten werden vorliegend insbesondere simulierte Erfassungsdaten von virtuellen Sensoren verstanden. Es kann sich dabei aber auch um echte Erfassungsdaten eines echten Sensors handeln. Wie bereits erläutert, ist dies für den Betrieb des automatischen Konfigurationssystems unerheblich. Weiterhin können auch bereits verarbeitete Sensordaten, die beispielsweise bereits mittels einer Auswerteroutine ausgewertet wurden, als Sensordaten oder auch als Daten bezeichnet werden.

Weitere Aktionen sind beispielsweise ein Verknüpfen von Daten, beispielsweise von unterschiedlichen Sensoren erfassten Daten wurden. Dies wird beispielsweise auch als Sensorfusion bezeichnet. Ziel der Sensorfusion ist es, alle verfügbaren Daten, die einen Informationsgehalt bezüglich eines bestimmten Parameters eines Objekts, wie beispielsweise die Position oder Geschwindigkeit, aufweisen, zu verknüpfen. Auf diese Weise wird erreicht, dass die Geschwindigkeit des Objekts nicht ausschließlich in Abhängigkeit von Sensordaten eines einzelnen Sensors, wie beispielsweise eines Geschwindigkeitssensors, ermittelt wird, sondern zusätzlich alle weiteren Sensordaten, die sich zum Ermitteln einer Geschwindigkeit eignen, ebenfalls betrachtet werden. Damit lassen sich einerseits eine Fehlfunktion eines Sensors aufdecken, beispielsweise durch Quervalidierung unterschiedlicher Sensordaten, andererseits kann eine Genauigkeit der Bestimmung des Parameters erhöht werden.

Auch Auswertealgorithmen zum Auswerten der erfassten Sensordaten sind Aktionen des Weltmodells. Unterschiedliche Auswertealgorithmen können beispielsweise verschiedene Informationen aus vorliegenden Sensordaten ermitteln. Beispielsweise kann ein erster Auswertealgorithmus dazu eingerichtet sein, einen Farbwert eines Objekts aus einem von einer Farbkamera erzeugten Farbbild zu extrahieren, und ein zweiter Auswertealgorithmus kann dazu eingerichtet sein, eine geometrische Form des Objekts zu ermitteln. Weiterhin können Auswertealgorithmen vorgesehen sein, die aus vorhandenen Daten neue Daten generieren, indem sie beispielsweise logische Schlüsse aus unterschiedlichen Sensordaten ziehen. Eine zugrundeliegende Logik kann dabei in Form von Regeln vorggegeben sein. Das automatische Konfigurationssystem kann aber auch dazu eingerichtet sein, basierend auf Erfahrungswerten eigene logische Verknüpfungen zu ermitteln. Beispielsweise kann das Konfigurationssystem lernen, dass in Deutschland alle Verkehrsschilder, die eine Geschwindigkeitsbegrenzung darstellen, rund sind, einen roten Ring am äußeren Rand tragen und die jeweilige zulässige Höchstgeschwindigkeit in dem roten Ring als schwarze Ziffern auf weißem Grund angeordnet sind. Damit ist das automatische Konfigurationssystem in der Lage, von der äußeren Erscheinung des Verkehrsschilds, die beispielsweise mittels unterschiedlicher Auswertealgorithmen ermittelt wird, darauf zu schließen, dass es sich um eine Geschwindigkeitsbegrenzung handelt.

Unter dem Bereich wird vorliegend beispielsweise der wahrnehmbare Bereich des Wahrnehmungssystems verstanden. Dieser kann insbesondere von den dem Wahrnehmungssystem zur Verfügung stehenden Sensoren zur Wahrnehmung abhängen. Bei kurzreichweitigen Sensoren kann der Bereich beispielsweise entsprechend kleiner sein als bei langreichweitigen Sensoren. Zu dem Bereich gehört insbesondere das Wahrnehmungssystem selbst und, falls dieses ein Teil eines autonomen Systems ist, das autonome System selbst, als auch eine Umgebung des Wahrnehmungssystems oder des autonomen Systems mit darin angeordneten Gegenständen oder Objekten. Der Bereich kann auch aufgrund von vorbekannten Daten festgelegt oder teilweise vorbestimmt sein. Beispielsweise kann ein Grundriss eines Gebäudes in dem Weltmodell abgespeichert sein, oder aber ein autonomes System, wie ein Haushaltsroboter, erstellt selbst einen Grundriss, indem erfasste Daten über einen Zeitraum hinweg gesammelt, verknüpft und ausgewertet werden. Insbesondere zu Simulationszwecken kann der Bereich als ein virtueller Bereich implementiert sein. Ein virtueller Bereich kann beispielsweise ein vorbestimmtes Szenario, beispielsweise eine Autofahrt auf der Autobahn, umfassen. In diesem Fall beziehen sich die von der Simulationseinheit simulierten erfassten Sensordaten auf den virtuellen Bereich und die darin angeordneten virtuellen Objekte.

Die Zustandseinheit ist dazu eingerichtet, einen aktuellen Zustand des Weltmodells zu bestimmen. Man kann auch sagen, dass die Zustandseinheit den aktuellen Zustand verwaltet. Der aktuelle Zustand beschreibt insbesondere den auf Grundlage der verfügbaren Daten wahrscheinlichsten Zustand für ein jedes Objekt in dem Weltmodell, umfassend des Wahrnehmungssystems selbst. Der aktuelle Zustand umfasst insbesondere alle bekannten Konzepte, mögliche Aktionen, sowie alle vorbekannten und/oder vorbestimmten Daten.

Der aktuelle Zustand kann ferner einen Informationsgraph für ein Objekt umfassen, der eine Repräsentation der bekannten Daten bezüglich des Objekts sowie deren Verknüpfung umfasst. Bei mehreren Objekten kann der aktuelle Zustand des Weltmodells eine Anzahl solcher Informationsgraphen umfassen, die auch zu einem gemeinsamen Informationsgraph zusammengefasst sein können. Der Informationsgraph umfasst insbesondere ein probabilistisches graphisches Datenmodell, wie beispielsweise einen Faktorgraph, das dazu geeignet ist, eine Schätzung einer Eigenschaft des Objekts zu bestimmen. Unter einer Schätzung ist insbesondere der wahrscheinlichste Zustand der Eigenschaft zu verstehen. Die Schätzung kann ausgehend von dem Informationsgraph durch einen geeigneten Auswertealgorithmus erfolgen.

Ein Faktorgraph kann beispielsweise durch Knoten, die über Kanten miteinander verbunden sein können, repräsentiert werden. Knoten sind insbesondere Variablenknoten oder Faktorknoten. Ein Variablenknoten repräsentiert einen Zustand einer Eigenschaft eines Konzepts, insbesondere eines Objekts in der Umgebung, als eine Zufallsvariable. Ein Faktorknoten umfasst insbesondere eine Abhängigkeit zwischen zwei direkt über Kanten mit dem jeweiligen Faktorknoten verbundenen Variablenknoten. Diese Abhängigkeit wird insbesondere durch Wahrscheinlichkeitsverteilungen modelliert. Man kann hierbei auch von einem Fusionsmodell sprechen. Durch eine Messung oder die Erfassung von Sensordaten kann beispielsweise der Wert einer Zufallsvariable bestimmt werden.

Zu dem aktuellen Zustand gehören auch Eigenschaften oder Zustände von einzelnen Komponenten des Wahrnehmungssystems, wie beispielsweise eines Sensors. Beispielsweise kann ein Sensor zu einem bestimmten Zeitpunkt eine Erfassung durchführen oder defekt sein und daher nicht zur Verfügung stehen. Auch, ob ein Sensor austauschbar ist oder nicht, ist in dem aktuellen Zustand enthalten. Weiterhin kann der aktuelle Zustand eine Datenbank mit historischen Daten umfassen. Unter historischen Daten werden insbesondere solche Daten verstanden, die sich auf einen früheren aktuellen Zustand des Weltmodells, der auch als historischer Zustand bezeichnet werden kann, beziehen.

Der aktuelle Zustand des Weltmodells umfasst insbesondere auch eine zeitliche Entwicklungsfunktion für die Objekte und/oder deren Eigenschaften in dem Weltmodell. Ein Beispiel für eine zeitliche Entwicklungsfunktion für ein sich bewegendes Objekt ist beispielsweise eine berechnete Bahnkurve, die die Position des Objekts zu zukünftigen Zeitpunkten beschreibt. Dabei kann insbesondere eine Unsicherheit der Bahnkurve, die sich beispielsweise aus Messunsicherheiten der verwendeten Sensoren ergibt, berücksichtigt werden. Insbesondere kann die Unsicherheit der Position mit der Zeit zunehmen. Insbesondere in dynamischen Umgebungen, wie beispielsweise im Verkehr oder auch in einem Haushalt, in dem bewegliche Objekte vorhanden sind, kann sich ein tatsächlicher Zustand schnell und unvorhersehbar ändern, wobei die Entwicklungsfunktion dies entsprechend berücksichtigt. Die Entwicklungsfunktion für einen bestimmten Parameter kann beispielsweise den Parameter in Form einer Wahrscheinlichkeitsverteilung beschreiben, deren Breite insbesondere von der verstrichenen Zeit seit der letzten Messung abhängt.

Die Planungseinheit ist zum Planen einer Sequenz von Aktionen aus einer Menge von bestimmten Aktionen zum Erreichen eines bestimmten Wahrnehmungsziels eingerichtet. Die bestimmten Aktionen der Menge sind insbesondere die in dem Weltmodell enthaltenen Aktionen. Bei der Planung der Sequenz geht die Planungseinheit erfindungsgemäß von dem aktuellen Zustand des Weltmodells aus. Das bestimmte Wahrnehmungsziel oder auch Wahrnehmungsaufgabe kann von außen vorgegeben sein oder das automatische Konfigurationssystem bestimmt dieses selbst. Das bestimmte Wahrnehmungsziel ist beispielsweise eine Bestimmung einer Pose eines Objekts mit eine bestimmten Mindestgenauigkeit. Unter einer Pose wird insbesondere eine absolute oder relative Position sowie eine absolute oder relative Ausrichtung des Objekts verstanden. Das bestimmte Wahrnehmungsziel ergibt sich beispielsweise mittelbar aus einer durchzuführenden Aufgabe eines autonomen Systems, wie der Montage zweier Objekte durch einen Montageroboter oder einem Einparkvorgang eines Kraftfahrzeugs.

Um das bestimmte Wahrnehmungsziel zu erreichen, plant die Planungseinheit eine Sequenz aus den bestimmten Aktionen des Weltmodells. Eine bestimmte Aktion weist insbesondere ihr zugeordnete Parameter auf. Dies sind beispielsweise Eingangsparameter und Ausgangsparameter, aber auch intrinsische Parameter wie beispielsweise eine Unsicherheit, ein zur Ausführung der Aktion benötigter Energieaufwand oder eine zur Ausführung der Aktion benötigter Zeitdauer.

Manche der Eingangsparameter können als Voraussetzung für eine Aktion betrachtet werden: Sofern diese Eingangsparameter nicht vollständig vorliegen oder definiert sind, kann die bestimmte Aktion nicht ausgeführt werden. Beispielsweise kann für eine Auswerteroutine ein Datensatz eines Sensors ein Eingangsparameter sein. Es können auch optionale Eingangsparameter vorgesehen sein, die beispielsweise eine Auswertung eines Datensatzes unterstützen können, aber nicht zwingend benötigt werden. Die Ausgangsparameter können beispielsweise als das Ergebnis des Ausführens der bestimmten Aktion betrachtet werden. Beispielsweise ist ein Bilddatensatz ein Ausgangsparameter einer Aktion, die eine Kamera zur Aufnahme eines Bildes veranlasst.

Die Sequenz von Aktionen umfasst zumindest zwei Aktionen, die sequenziell, das heißt nacheinander, in der Sequenz angeordnet sind. Die Sequenz von Aktionen kann insofern als eine Arbeitsanweisung betrachtet werden, wobei die Aktionen der Sequenz Schritt für Schritt abzuarbeiten oder durchzuführen sind.

Die Simulationseinheit ist dazu eingerichtet, eine Ausführung der geplanten Sequenz zu simulieren. Hierfür umfasst die Simulationseinheit insbesondere eine Simulationsumgebung, mittels welcher eine Auswirkung einer jeden der Aktionen auf den Zustand des Weltmodells ermittelt wird. Insofern kann die Simulationseinheit als eine Zustandseinheit aufgefasst werden, die einen hypothetischen Zustand des Weltmodells bestimmt, wobei der hypothetische Zustand jeweils die Ergebnisse der simulierten Aktionen umfasst, also beispielsweise weitere Sensordaten. Aufgrund des semantischen Datenmodells ist die Simulationseinheit dazu eingerichtet, das Erfassen von Sensordaten mit den tatsächlich oder nur virtuell vorhandenen Sensoren zu simulieren, wobei jeweils gemäß des Sensormodells die Erzeugung entsprechender Sensordaten simuliert wird.

Die Simulationseinheit generiert beispielsweise, wie auch die Zustandseinheit, einen Informationsgraphen, der die durch die Ausführung der Aktionen gewonnenen Informationen aufweist und Verknüpfungen zwischen diesen darstellt. Mittels des Informationsgraphs, der insbesondere als ein Faktorgraph implementiert ist, lässt sich insbesondere der aktuell wahrscheinlichste Zustand bezüglich des Wahrnehmungsziels ermitteln.

Die Simulationseinheit simuliert die Durchführung der geplanten Sequenz, indem sie eine Aktion nach der anderen abarbeitet, das heißt die Durchführung der jeweils nächsten Aktion der Sequenz simuliert. Die Durchführung unterschiedlicher Aktionen kann sich dabei zeitlich überschneiden, beispielsweise kann das Erfassen von Sensordaten eine bestimmte Zeitdauer in Anspruch nehmen, während der bereits ein Elektromotor angesteuert wird, um die Ausrichtung eines anderen Sensors zu ändern. Bei der Simulation werden alle Parameter einer jeweiligen Aktion berücksichtigt, wie beispielsweise ein Enegiebedarf, eine Zeitdauer zur Ausführung, zur Ausführung benötigte Ressourcen, wie beispielsweise eine CPU-Zeit oder ein RAM-Speicherplatz, sowie statistische Einflüsse. Auf diese Weise wird ein realitätsnahes Simulationsergebnis erreicht. Beispielsweise kann bei einer simulierten Erfassung von Sensordaten ein Rauschen in den erfassten Daten vorhanden sein. Weiterhin weisen mehrere Messungen eines Parameters mit einem Sensor beispielsweise eine Streuung der erzielten Messergebnisse auf. Für eine realitätsnahe Simulation dieser statistischen Einflüsse weist die Simulationseinheit insbesondere einen Zufallsgenerator auf.

Der vorbeschriebene Prozess des Planens der Sequenz und der vorbeschriebene Prozess des Simulierens der Ausführung der Sequenz sind insbesondere nicht als getrennt voneinander zu betrachten. Vielmehr stehen die Planungseinheit und die Simulationseinheit beispielsweise interaktiv miteinander in Verbindung und/oder sind als eine einzelne Einheit ausgebildet. Beispielsweise beginnt die Simulationseinheit mit der Simulation sofort, wenn eine Aktion geplant ist. Die Planungseinheit hat vorzugsweise Zugriff auf Simulationsergebnisse von bereits geplanten Aktionen und kann dementsprechend die weitere Planung an diese Ergebnisse anpassen.

Ohne die Schnittstelle kann das automatische Konfigurationssystem insbesondere in einem reinen Simulationsbetrieb betrieben werden. Mit dieser Schnittstelle wird hingegen erreicht, dass die geplante Sequenz mit dem Wahrnehmungssystem tatsächlich ausgeführt wird. Die geplante Sequenz ist dabei vorzugsweise die ausgewählte Sequenz, die aufgrund der simulierten Ausführung als die unter dem bestimmten Kriterium bestgeeignetste Sequenz ermittelt wurde.

Über die Schnittstelle empfängt das automatische Konfigurationssystem insbesondere auch erfasste Sensordaten, die dann beispielsweise einer Auswertung zugeführt werden. Insbesondere ist das automatische Konfigurationssystem dazu eingerichtet, dynamisch auf diese tatsächlichen Daten zu reagieren. Hierunter wird beispielsweise verstanden, dass das Konfigurationssystem eine neue Sequenz plant, wenn die tatsächlichen Daten von den in der ursprünglich geplanten Sequenz simulierten Daten erheblich abweichen, beispielsweise wenn ein Teilziel mit einer Teilsequenz nicht erreicht wurde.

Gemäß einer Ausführungsform des Konfigurationssystems ist die Planungseinheit dazu eingerichtet, eine Anzahl von N Sequenzen zu planen, und die Simulationseinheit ist dazu eingerichtet, die Ausführung einer jeden der N geplanten Sequenzen der Anzahl zu simulieren. Ferner ist eine Bewertungseinheit vorgesehen, welche dazu eingerichtet ist, einer jeden der N geplanten Sequenzen der Anzahl in Abhängigkeit der simulierten Ausführung der jeweiligen Sequenz und eines Erreichens des bestimmten Wahrnehmungsziels eine Bewertung zuzuordnen.

Diese Ausführungsform ist besonders vorteilhaft, da eine große Anzahl an Sequenzen geplant und simuliert werden kann. Eine jede Sequenz der Anzahl ist dabei insbesondere einmalig, das heißt keine zwei Sequenzen sind identisch. Auf diese Weise lassen sich unabhängig voneinander unterschiedliche Sequenzen planen, um das Wahrnehmungsziel zu erreichen. Ferner ist es aufgrund der Bewertung möglich, aus den vielen Sequenzen die zum Erreichen des jeweiligen Wahrnehmungsziels geeigneten auszuwählen.

Die Bewertungseinheit ist insbesondere dazu eingerichtet, zu ermitteln, ob das Wahrnehmungsziel mit einer bestimmten Sequenz erreicht wurde oder ob es nicht erreicht wurde, und der bestimmten Sequenz eine entsprechende Bewertung zuzuordnen. Die Bewertung kann hierbei beispielsweise auch mehr als nur diese zwei Möglichkeiten umfassen. Insbesondere kann die Bewertung eine Qualitätsmetrik umfassen. Die Qualitätsmetrik umfasst beispielsweise eine Aussage darüber, wie sehr das Wahrnehmungsziel übertroffen oder verfehlt wurde. Als Beispiel hierfür sei die Bestimmung einer Position mit einer Genauigkeit von 1 cm genannt. Verschiedene Sequenzen führen beispielsweise zu einer Bestimmung der Position mit exakt dieser Genauigkeit, mit einer Genauigkeit von 0,5 cm oder auch mit einer Genauigkeit von 0,1 cm. Die höhere Genauigkeit kann hierbei beispielsweise aus der Verwendung einer größeren Anzahl von Sensoren oder einer größeren Anzahl von Messungen resultieren, was beispielsweise einen größeren Zeit- und/oder Energieaufwand mit sich brächte.

Die Bewertungseinheit kann, wie auch die weiteren Einheiten des Konfigurationssystems, hardwaretechnisch und/oder auch softwaretechnisch implementiert sein.

Gemäß einer weiteren Ausführungsform des Konfigurationssystems ist die Bewertungseinheit dazu eingerichtet, in Abhängigkeit eines vorgegebenen Kriteriums und der der jeweiligen Sequenz zugeordneten Bewertung eine Sequenz aus den N geplanten Sequenzen der Anzahl auszuwählen.

Das vorgegebene Kriterium kann beispielsweise ein möglichst geringer Energieverbrauch, eine möglichst kurze Durchführungsdauer oder dergleichen sein. Das vorgegebene Kriterium kann insbesondere von dem bestimmten Wahrnehmungsziel abhängen.

In dem oben genannten Beispiel würde die Bewertungseinheit, wenn das vorgegebene Kriterium eine möglichst kurze Durchführungsdauer ist, beispielsweise diejenige Sequenz auswählen, die exakt das Wahrnehmungsziel erreicht, da diese am schnellsten durchführbar ist.

Die ausgewählte Sequenz kann insofern als die beste Sequenz der Anzahl von N Sequenzen in Bezug auf das bestimmte Wahrnehmungsziel unter Berücksichtigung des vorgegebenen Kriterium betrachtet werden.

Gemäß einer weiteren Ausführungsform des Konfigurationssystems ist die Simulationseinheit dazu eingerichtet, die Ausführung mehrerer der N geplanten Sequenzen der Anzahl parallel zu simulieren.

Dies bietet den Vorteil, dass auch bei einer großen Menge geplanter Sequenzen schnell diejenige ermittelt werden kann, die das Wahrnehmungsziel unter verschiedenen Gesichtspunkten am besten erreicht.

Gemäß einer weiteren Ausführungsform des Konfigurationssystems ist die Planungseinheit dazu eingerichtet, die Anzahl von N Sequenzen parallel zu planen.

Gemäß einer weiteren Ausführungsform des Konfigurationssystems ist die Planungseinheit dazu eingerichtet, jede mögliche Sequenz von Aktionen aus der Menge der bestimmten Aktionen zu planen.

Hierunter wird vorliegend beispielsweise verstanden, dass die Planungseinheit beim Planen der Sequenzen beispielsweise wie folgt vorgeht. Es wird eine bestimmte erste Aktion als Anfang für die Sequenz gewählt. Als zweite Aktion wird jede der bestimmten Aktionen in Betracht gezogen, wodurch so viele unterschiedliche Sequenzen entstehen, wie es bestimmte Aktionen gibt. Für die dritte Aktion wird dies beispielsweise für jede der individuellen Sequenzen wiederholt. Insgesamt steigt die Anzahl der geplanten Sequenzen damit exponentiell mit der Anzahl an Aktionen pro Sequenz.

Diese Ausführungsform stellt sicher, dass jede mit dem Wahrnehmungssystem mögliche Sequenz, die zum Erreichen des Wahrnehmungsziels geeignet ist, auch gefunden wird.

Die Anzahl an geplanten Sequenzen lässt sich durch verschiedene Methoden reduzieren, so dass der Planungsaufwand beispielsweise nicht exponentiell mit der Anzahl an Aktionen pro Sequenz ansteigt. Beispielsweise kann vorgesehen sein, dass die Planungseinheit dazu eingerichtet ist, heuristische Verfahren zu verwenden, um insbesondere schneller und effizienter die Sequenzen zu planen, die das Wahrnehmungsziel mit hoher Wahrscheinlichkeit erreichen und/oder die das Wahrnehmungsziel vorraussichtlich besonders schnell, das heißt mit möglichst wenigen Aktionen in einer Sequenz, erreichen. Beispielsweise kann die Planungseinheit hierfür die Bewertung einer Sequenz durch die Bewertungseinheit heranziehen und/oder eigene Heuristiken aufbauen.

Es kann vorgesehen sein, dass bestimmte Aktionen voraussetzen, dass andere bestimmte Aktionen diesen in der Sequenz vorausgehen. Insbesondere Aktionen, die bestimmte Eingangsparameter voraussetzen, sind hierfür ein Beispiel. Auf diese Weise wird die Anzahl möglicher Sequenzen reduziert, wodurch auch der Planungs- und/oder Simulationsaufwand reduziert wird.

Weiterhin kann vorgesehen sein, dass eine bestimmte Aktion nur eine gewisse Anzahl oft direkt hintereinander, oder auch alternierend mit einer anderen bestimmten Aktion, durchgeführt werden darf. Auch mittels solcher Regeln lässt sich die Anzahl an möglichen Sequenzen deutlich reduzieren.

Gemäß einer weiteren Ausführungsform des Konfigurationssystems umfasst die geplante Sequenz höchstens eine Anzahl von M Aktionen.

Dies hat den Vorteil, dass die geplanten Sequenzen nicht beliebig lang werden, was dazu führen würde, dass auch die Zeit zu ihrer Ausführung entsprechend lang würde. Die Anzahl M kann insbesondere in Abhängigkeit des Wahrnehmungsziels und des aktuellen Zustands des Weltmodells gewählt werden. Insbesondere ist die Planungseinheit dazu eingerichtet, die Anzahl M dynamisch zu bestimmen.

In Ausführungsformen kann die Anzahl M derart bestimmt sein, dass eine Durchführung der geplanten Sequenz eine bestimmte Gesamtdauer nicht überschreitet. Hierfür weisen die bestimmten Aktionen beispielsweise als Parameter eine ungefähre Dauer der für ihre Durchführung benötigten Zeit auf. Insbesondere kann hierdurch die Anzahl M für unterschiedliche geplante Sequenzen unterschiedlich sein, auch bei gleichem Wahrnehmungsziel.

Gemäß einer weiteren Ausführungsform des Konfigurationssystems ist die Planungseinheit dazu eingerichtet, das bestimmte Wahrnehmungsziel in eine Anzahl von Teilzielen zu unterteilen und für jedes der Teilziele der Anzahl zumindest eine Teilsequenz von Aktionen der Anzahl der bestimmten Aktionen zu planen. Die Simulationseinheit ist zum Simulieren der Ausführung einer jeden geplanten Teilsequenz der Anzahl der Teilziele eingerichtet und die Bewertungseinheit ist dazu eingerichtet, einer jeden geplanten Teilsequenz der Anzahl in Abhängigkeit der simulierten Ausführung der jeweiligen geplanten Teilsequenz und eines Erreichens des Teilziels eine Bewertung zuzuordnen.

Diese Ausführungsform ist insbesondere bei komplexen Wahrnehmungszielen vorteilhaft, da die einzelnen Teilziele für sich genommen beispielsweise relativ einfach planbar sind. Unter relativ einfach wird hierbei beispielsweise verstanden, dass die Anzahl an Aktionen der einfacheren Sequenz kleiner ist als bei der komplexeren Sequenz.

Gemäß einer weiteren Ausführungsform des Konfigurationssystems ist die Bewertungseinheit dazu eingerichtet, für ein jedes Teilziel der Anzahl in Abhängigkeit eines spezifischen Teilziel-Kriteriums und der der jeweiligen Teilsequenz zugeordneten Bewertung eine Teilsequenz aus den geplanten Teilsequenzen auszuwählen, wobei die Planungseinheit dazu eingerichtet ist, die Sequenz zum Erreichen des Wahrnehmungsziels mittels Verknüpfung der ausgewählten Teilsequenzen zu planen.

Unter dem Verknüpfen wird hierbei insbesondere verstanden, dass die Planungseinheit die jeweiligen für ein Teilziel ausgewählten Teilsequenzen in der Reihenfolge, in der die Teilziele zum Erreichen des Wahrnehmungsziels angeordnet sind, aneinanderreiht.

Das Teilziel-Kriterium ist vergleichbar mit dem vorgegebenen Kriterium für die geplante Sequenz, bezieht sich jedoch nur auf das Teilziel. Jedes Teilziel kann daher insbesondere ein eigenes spezifisches Teilziel-Kriterium aufweisen, nach dem die entsprechenden Teilsequenzen ausgewählt, das heißt insbesondere beurteilt und/oder geordnet, werden.

Ferner kann vorgesehen sein, die Teilsequenzen zum Erreichen eines Teilziels einzeln über die Schnittstelle zu übertragen. Besonders in dynamischen Umgebungen, in denen damit zu rechnen ist, dass einzelne Teilziele nicht sofort erreicht werden, kann dies vorteilhaft sein, da nicht jedesmal, wenn ein Teilziel nicht erreicht wird, die gesamte Sequenz neu geplant werden muss. Hierdurch kann daher die Effizienz des Systems verbessert werden.

Gemäß einer weiteren Ausführungsform des Konfigurationssystems ist eine Lerneinheit vorgesehen, die dazu eingerichtet ist, in Abhängigkeit der geplanten Sequenz und der zugeordneten Bewertung und/oder in Abhängigkeit der geplanten Teilsequenz und der zugeordneten Bewertung eine neue Aktion zu erzeugen.

Die Lerneinheit umfasst insbesondere ein neuronales Netzwerk. Die Lerneinheit ist dazu eingerichtet, beispielsweise durch ein Verknüpfen zweier Aktionen mit bestimmten Parametern, eine neue kombinierte Aktion zu erzeugen, die der Menge von bestimmten Aktionen in dem Weltmodell hinzugefügt wird. Diese neuen Aktionen können insbesondere zu einer Energie- und/oder Zeiteinsparung führen. Die neue Aktion kann auch eine der bestimmten Aktionen ersetzen oder deren Parameter verändern, wenn sich beispielsweise bestimmte Parameter einer bestimmten Aktion mit der Zeit verändert haben, beispielsweise aufgrund von Verschleiß. Ferner kann auch eine Genauigkeit von erfassten Sensordaten eines Sensors in der Realität kleiner oder größer sein, als dies aus einem Datenblatt des Sensors hervorgeht.

Das automatische Konfigurationssystem kann insbesondere gezielt Wahrnehmungsziele bestimmen, die zu einem Training der Lerneinheit führen, so dass neue Aktionen erzuegt werden. Das ist insbesondere bei einer neuen Inbetriebnahme eines Wahrnehmungssystems nützlich, damit das automatische Konfigurationssystem die Aktionen den tatsächlichen Gegebenheiten anpassen kann. Weiterhin lassen sich mittels der Lerneinheit zunächst unbekannte Wechselwirkungen zwischen Konzepten, ziwschen Aktionen und/oder zwischen Konzepten und Aktionen erkennen und entsprechend in dem Weltmodell integrieren.

Gemäß einer weiteren Ausführungsform des Konfigurationssystems umfasst das bestimmte Wahrnehmungsziel ein Ermitteln einer Pose eines Objekts in dem Weltmodell mit einer bestimmten Genauigkeit, ein Klassifizieren des Objekts, ein Bestimmen einer Unsicherheit eines Sensors des Wahrnehmungssystems und/oder ein Bestimmen einer Unsicherheit eines Auswertealgorithmus.

Unter einer Pose wird insbesondere eine Position sowie eine Ausrichtung eines Objekts verstanden. Die Position kann beispielsweise als Ortkoordinaten in einem Koordinatensystem angegeben werden, wobei die Ausrichtung als ein Vektor in dem Koordinatensystem angegeben wird.

Gemäß einem zweiten Aspekt wird ein autonomes System nach dem Anspruch 13 vorgeschlagen.

Das autonome System ist beispielsweise ein autonomes Fahrzeug, ein Haushaltsroboter oder auch ein Industrieroboter. Das Wahrnehmungssystem weist vorteilhaft meherer, für den jeweiligen geplanten Einsatzzweck des autonomen Systems geeignete Sensoren auf. Insbesondere umfasst das Wahrnehmungssystem das automatische Konfigurationssystem gemäß dem ersten Aspekt, wobei ferner eine Schnittstelle von dem automatischen Konfigurationssystem zu dem Wahrnehmungssystem vorhanden ist.

Gemäß einem dritten Aspekt wird ein Verfahren nach dem Anspruch 14 vorgeschlagen.

Das vorgeschlagene Verfahren eignet sich insbesondere zum Betreiben eines automatischen Konfigurationssystems gemäß dem ersten und/oder zweiten Aspekt.

Weiterhin wird ein Computerprogrammprodukt gemäß dem Anspruch 15 vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockschaltbild eines Ausführungsbeispiels eines automatischen Konfigurationssystems;
Fig. 2 zeigt ein schematisches Blockschaltbild eines Ausführungsbeispiels eines Verfahrens zum Betreiben eines automatischen Konfigurationssystems;
Fig. 3 zeigt eine beispielhafte schematische Darstellung eines Ausführungsbeispiels eines Weltmodells;
Fig. 4 zeigt eine beispielhafte schematische Darstellung eines Ausführungsbeispiels eines aktuellen Zustands;
Fig. 5 zeigt eine beispielhafte schematische Darstellung eines Ausführungsbeispiels einer geplanten Sequenz;
Fig. 6 zeigt eine beispielhafte schematische Darstellung eines Ausführungsbeispiels eines simulierten Zustands; und
Fig. 7 zeigt ein beispielhaftes Diagramm eines Ausführungsbeispiels zweier unterschiedlicher Sequenzen.

In den Figuren sind gleiche oder funktionsgleiche Elemente mit denselben Bezugszeichen versehen worden, sofern nichts anderes angegeben ist.

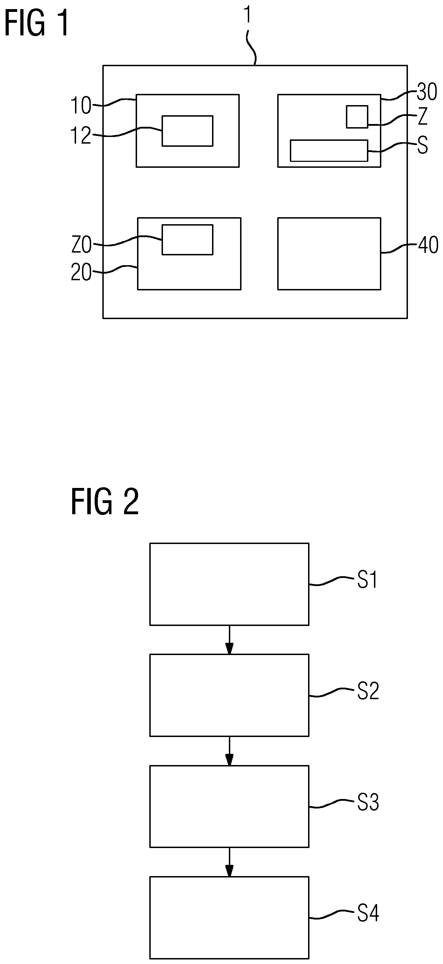

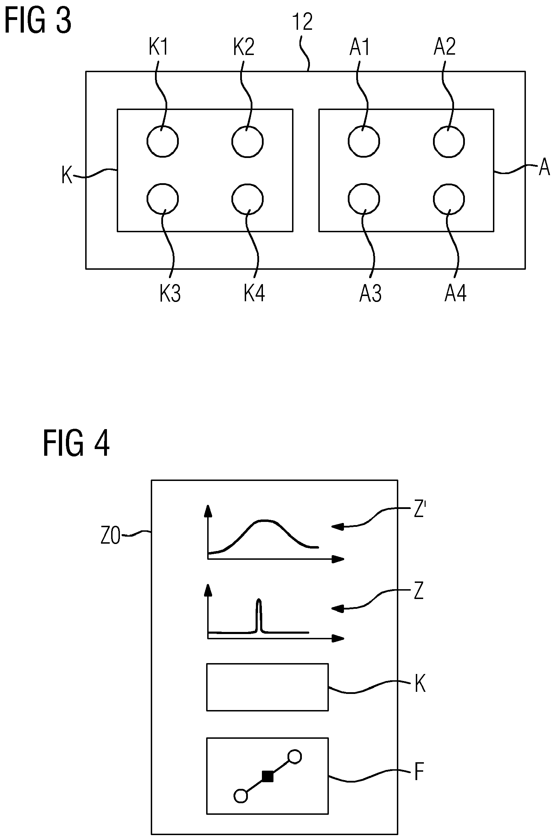

Fig. 1 zeigt ein schematisches Blockschaltbild eines Ausführungsbeispiels eines automatischen Konfigurationssystems 1 für ein Wahrnehmungssystem. Das automatische Konfigurationssystem 1 umfasst eine Modellierungseinheit 10, welche zum Bereitstellen eines Weltmodells 12 eingerichtet ist. Das Weltmodell 12 (siehe auch Fig. 3) umfasst eine Beschreibung des Wahrnehmungssystems sowie eines Bereichs, wie beispielsweise eine Umgebung, in dem das Wahrnehmungssystem angeordnet ist. Das Wahrnehmungssystem selbst ist nicht dargestellt, da es sich vorliegend insbesondere um ein virtuelles, das heißt nur in der Beschreibung des Weltmodells 12 vorhandenes Wahrnehmungssystem handelt. Die Beschreibung des Wahrnehmungssystems in dem Weltmodell 12 umfasst insbesondere ein semantisches Datenmodell, welches Konzepte K und Aktionen A aufweist (siehe Fig. 3). Beispielsweise wird ein an dem Wahrnehmungssystem vorhandener Sensor durch ein Konzept K1 beschrieben. Weitere Konzepte K beschreiben beispielsweise ein Objekt K2 in der Umgebung des Wahrnehmungssystems, eine Beschreibung der Umgebung K3, sowie ein Referenzkoordinatensystem K4. Aktionen A sind insbesondere eine Erfassung von Sensordaten A1 mit dem Sensor K1, ein Verknüpfen A2 von unterschiedlichen Sensordaten, ein Auswerten A3 der erfassten und/oder verknüpften Sensordaten sowie ein Einstellen A4 eines Parameters des Sensors K1. Dies kann beispielsweise ein Einstellen einer Ausrichtung des Sensors K1 umfassen.

Beispiele für Sensoren sind Odometer, Inertialsensoren, GPS-Sensoren, Kameras, Radarsensoren, Bewegungssensoren, Kraftsensoren, Temperatursensoren, Winkelmesser und so weiter. Grundsätzlich kann jeder Sensor in dem Wahrnehmungssystem Verwendung finden.

Weiterhin weist das Konfigurationssystem 1 eine Zustandseinheit 20 auf, die zum Bestimmen eines aktuellen Zustands Z0 des Weltmodells 12 eingerichtet ist. Der aktuelle Zustand Z0 des Weltmodells 12 umfasst beispielsweise eine Schätzung Z' (siehe Fig. 4) eines Parameters eines Objekts in dem Weltmodell 12, wie beispielsweise eine Pose des Objekts. Ferner sind alle verfügbaren Konzepte K sowie eine Repräsentation in Form eines Graphs, die beispielsweise als ein Faktorgraph F (siehe Fig. 4) gegeben ist, in dem aktuellen Zustand Z0 enthalten. Der aktuelle Zustand Z0 kann auch ein bestimmtes Wahrnehmungsziel Z umfassen.

Darüber hinaus umfasst das Konfigurationssystem 1 eine Planungseinheit 30, welche dazu eingerichtet ist, aus den verfügbaren Aktionen A1 - A4 des Weltmodells 12 eine Sequenz S zum Erreichen des bestimmten Wahrnehmungsziels Z zu planen. Ferner ist eine Simulationseinheit 40 vorhanden, die zum Simulieren einer Ausführung der geplanten Sequenz S eingerichtet ist.

Fig. 2 zeigt ein schematisches Blockschaltbild eines beispielhaften Verfahrens zum Betreiben eines automatischen Konfigurationssystems 1, beispielsweise des in der Fig. 1 dargestellten.

In einem ersten Schritt S1 wird ein Weltmodell 12 umfassend ein semantisches Datenmodell des Wahrnehmungssystems und eine Beschreibung eines Bereichs, wobei der Bereich das Wahrnehmungssystem und eine Umgebung des Wahrnehmungssystems umfasst, bereitgestellt. Das Bereitstellen kann dabei umfassen, dass ein Benutzer einzelne Konzepte K und/oder Aktionen A in dem semantischen Datenmodell programmiert. Es kann auch ein Abrufen von Konfigurationseinstellungen des Wahrnehmungssystems umfassen. Die kann mit dem Bootvorgang eines Computers verglichen werden, wobei jeder tatsächlich oder virtuell vorhandene Sensor K1 in das Weltmodell 12 als ein Konzept K mit entsprechenden Aktionen A integriert wird.

In einem zweiten Schritt S2 wird ein aktueller Zustand Z0 des Weltmodells 12 bestimmt. Der aktuelle Zustand Z0 umfasst beispielsweise Bereitschaftsinformationen für die vorhandenen Sensoren und, soweit diese vorhanden sind, bekannte Daten zu dem Bereich und/oder Objekten in dem Bereich, wie beispielsweise ein Grundriss eines Gebäudes oder auch ein bestimmtes Wahrnehmungsziel Z. Von diesen Daten kann auch bereits eine Schätzung Z' bezüglich einer Eigenschaft eines Objekts abgeleitet werden. Dies kann beispielsweise mittels eines Faktorgaphs F erfolgen, in den alle bekannten Daten eingetragen werden und der anschließend entsprechend ausgewertet wird.

In einem dritten Schritt S3 wird eine Sequenz S von Aktionen A aus einer Menge von bestimmten Aktionen A zum Erreichen des bestimmten Wahrnehmungsziels Z geplant.

In einem vierten Schritt S4 wird eine Ausführung der geplanten Sequenz S simuliert. Hierzu simuliert die Simulationseinheit 40 die Ausführung jeder Aktion A der Sequenz S, in der Reihenfolge, in der diese in der Sequenz S angeordnet sind. Dabei ist die Simulationseinheit 40 insbesondere dazu eingerichtet, einen Zustand des Weltmodells 12 nach einer jeden simulierten Aktion A zu simulieren. Auf diese Weise lässt sich der Fortschritt beim Erreichen des bestimmten Wahrnehmungsziels Z mit jedem Schritt verfolgen und die Sequenz S bei Erreichen des Wahrnehmungsziels Z beenden.

Fig. 3 zeigt eine beispielhafte schematische Darstellung eines Weltmodells 12. Das Weltmodell 12 weist insbesondere ein semantisches Datenmodell auf, wobei man zwischen Konzepten K und Aktionen A unterscheiden kann. Konzepte K beschreiben die in dem Weltmodell 12 vorhandenen Objekte, wobei hierzu grundsätzlichen jedes Wissen, das heißt jede Information über das Wahrnehmungssystem, den Bereich und/oder die Umgebung, gehört. Beispielsweise wird ein an dem Wahrnehmungssystem vorhandener Sensor durch ein Konzept K1 beschrieben. Weitere Konzepte K beschreiben beispielsweise ein Objekt K2 in der Umgebung des Wahrnehmungssystems, umfassen eine Beschreibung der Umgebung K3 sowie ein Referenzkoordinatensystem K4. Die Aktionen A umfassen alle von dem Wahrnehmungssystem durchführbaren Aktionen A. Dies sind insbesondere Aktionen A, die dazu dienen, das Weltmodell 12 mit neuen Informationen zu bereichern. Insbesondere sind dies ein Erfassen A1 von Sensordaten mit den verfügbaren Sensoren K1, ein Verknüpfen A2 von Sensordaten unterschiedlicher Sensoren K1, ein Auswerten A3 der erfassten und/oder verknüpften Sensordaten sowie ein Einstellen A4 eines Parameters des Sensors K1.

Im Betrieb des automatischen Konfigurationssystems 1 können insbesondere weitere Konzepte K und/oder Aktionen A durch das Konfigurationssystem 1 selbst hinzugefügt und/oder vorhandene ersetzt oder angepasst werden.

Fig. 4 zeigt eine beispielhafte schematische Darstellung eines aktuellen Zustands Z0, den beispielsweise die Zustandseinheit 20 (siehe Fig. 1) in Abhängigkeit des Weltmodells 12 der Modellierungseinheit 10 bestimmt hat. Der aktuelle Zustand Z0 umfasst insbesondere eine Schätzung Z' für eine Objektpose sowie ein Wahrnehmungsziel Z für diese Objektpose. Die geschätzte Objektpose Z' ist in dem aktuellen Zustand Z0 mit großer Ungenauigkeit behaftet, wie durch die breite Kurve schematisch dargestellt ist. Das Wahrnehmungsziel Z liegt darin, die Objektpose durch eine geeignete Sequenz S von Aktionen A mit einer bestimmten hohen Genauigkeit zu bestimmen, wie schematisch durch die vergleichsweise scharfe Kurve dargestellt ist.

Der aktuelle Zustand Z0 umfasst auch alle Konzepte K des Weltmodells. Ferner ist ein Faktorgraph F enthalten, der eine Repräsentation der bekannten Daten in Form eines Graphs darstellt. Der Faktorgraph F umfasst hier zwei als Kreise dargestellte Variablenknoten, die beispielsweise ein Referenzkoordinatensystem und ein Sensorkoordinatensystem darstellen, wobei diese beiden Variablenknoten mit einer Kante mit einem Faktorknoten verbunden sind. Der Faktorknoten beschreibt beispielsweise die Beziehung zwischen dem Referenzkoordinatensystem und dem Sensorkoordinatensystem.

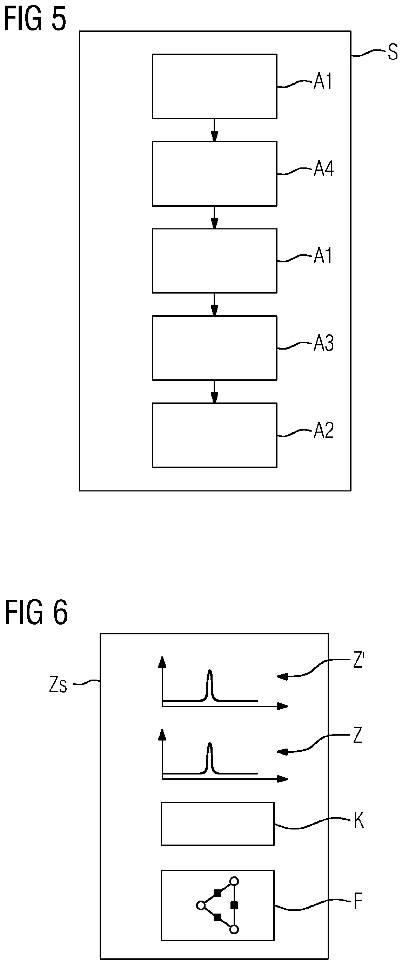

Fig. 5 zeigt eine beispielhafte schematische Darstellung einer geplanten Sequenz S, die insbesondere durch die Planungseinheit 30 des automatischen Konfigurationssystems 1 der Fig. 1 geplant wurde. Die dargestellte Sequenz S ist beispielsweise zum Erreichen des Wahrnehmungsziels Z des in der Fig. 4 dargestellten aktuellen Zustands Z0 geeignet.

Die Sequenz S beginnt mit einem Erfassen A1 von Sensordaten. Beispielsweise handelt es sich eine Aufnahme eines Kamerabildes mit einem als Kamera ausgebildeten Sensor K1. Anschließend wird ein Parameter der Kamera K1 eingestellt A4, hier wird beispielsweise ein Blickwinkel der Kamera K1 verändert. Anschließend wird ein weiteres Bild mit der Kamera K1 erfasst A1. Die nunmehr zwei vorhandenen Datensätze werden in einer weiteren Aktion A3 miteinander verknüpft. Schließlich werden die verknüpften Daten mittels einer geeigneten Auswerteroutine A2 ausgewertet. Mittels den zwei Bildern aus unterschiedlichen Blickwinkeln lässt sich beispielsweise mit der Auswerteroutine A2 die Objektpose schätzen. Sofern die erfassten Daten hinreichend genau sind, kann damit das Wahrnehmungsziel Z erreicht sein, wie nachfolgend in der Fig. 6 dargestellt.

Fig. 6 zeigt eine beispielhafte schematische Darstellung eines simulierten Zustands Zs. Der simulierte Zustand Zs ergibt sich insbesondere aus dem in der Fig. 4 dargestellten aktuellen Zustand Z0 mittels simulierter Durchführung der in der Fig. 5 dargestellten Sequenz S. Beispielsweise führt die in der Fig. 1 dargestellte Simulationseinheit 40 die entsprechende Simulation durch.

In dem simulierten Zustand Zs entspricht die Schätzung Z' der Objektpose dem Wahrnehmungsziel Z, was zeigt, dass die geplante Sequenz S zum Erreichen des Wahrnehmungsziels Z geeignet ist. Ferner weist der Faktorgraph F in dem simulierten Zustand Zs einen weiteren Variablenknoten auf, der mit den beiden anderen Variablenknoten, die bereits in dem aktuellen Zustand Z0 vorhanden waren, mittels zweier Kanten aufweisend Faktorknoten verknüpft ist. Der neue Variablenknoten beschreibt beispielsweise ein Objektkoordinatensystem und die Faktorknoten beschreiben eine Abhängigkeit zwischen den jeweiligen Koordinatensystemen. Hieraus lässt sich die Objektpose ableiten.

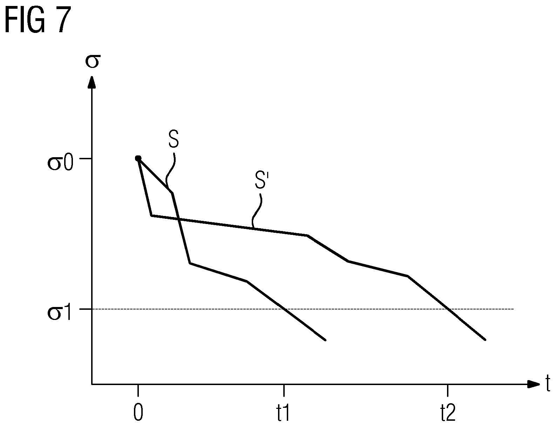

Fig. 7 zeigt ein beispielhaftes Diagramm zweier unterschiedlicher Sequenzen S, S'. In dem Diagramm ist eine Unsicherheit σ, beispielsweise einer Positionsschätzung, gegen eine Zeit t aufgetragen. Die beiden Sequenzen S, S` sind beispielsweise zwei unterschiedliche von der Planungseinheit 30 geplante Sequenzen zum Erreichen des bestimmten Wahrnehmungsziels Z. Zum Zeitpunkt t=0 ist weist die Positionsschätzung eine Unsicherheit σ0 auf. Ausgehend hiervon werden in Abhängigkeit einer jeweiligen Sequenz S, S' bestimmte Aktionen simuliert. Die Sequenz S umfasst beispielsweise vier Abschnitte, die jeweils das Durchführen einer Aktion A repräsentieren. Das Durchführen jeder Aktion A benötigt eine bestimmte Zeitdauer. Nach den vier Aktionen A hat die Sequenz S die angestrebte Unsicherheit σ1 erreicht, wobei dies zu einem Zeitpunkt t1 erreicht wird. Die weitere Sequenz S' weist fünf Abschnitte auf, die fünf Aktionen A repräsentieren, und erreicht die angestrebte Unsicherheit σ1 erst zu einem späteren Zeitpunkt t2. Im direkten Vergleich dieser beiden Sequenzen S, S' unter dem Gesichtspunkt einer möglichst schnellen Zielerreichung wäre die Sequenz S der Sequenz S' überlegen und würde daher bevorzugt ausgeführt werden. Eine entsprechende Bewertungseinheit (nicht dargestellt) wäre dazu eingerichtet, die Sequenzen S, S' zunächst zu bewerten und beispielsweise die Sequenz S auszuwählen.

Obwohl die vorliegende Erfindung anhand von Ausführungsbeispielen beschrieben wurde, ist sie vielfältig modifizierbar. Insbesondere lassen sich die Sequenzen anhand verschiedenster Kriterien bewerten, wie beispielsweise minimaler Energieaufwand, minimale Verwendung von Systemressourcen, möglichst geringe Anzahl von Aktionen und so weiter.

Ferner kann eine Lerneinheit dazu dienen, das automatische Konfigurationssystem mit zunehmender Betriebsdauer ständig zu verbessern, indem diese neue Aktionen und/oder Konzepte erzeugt. Dies kann insbesondere durch gezieltes Sammeln von Daten und deren Auswertung erfolgen. Insofern kann hier auch von einem heuristischen Ansatz zur Verbesserung gesprochen werden. Ferner kann eine statistische Analyse großer vorhandener Datenmengen dazu dienen, Korrelationen zwischen Daten zu ermitteln, woraus sich neue Konzepte und/oder Aktionen ableiten lassen.

## Patentansprüche

1. Automatisches Konfigurationssystem (1) für ein Wahrnehmungssystem, mit:
- einer Modellierungseinheit (10) zum Bereitstellen eines Weltmodells (12) welches ein semantisches Datenmodell des Wahrnehmungssystems und eine Beschreibung eines Bereichs umfasst, wobei der Bereich das Wahrnehmungssystem und eine Umgebung des Wahrnehmungssystems umfasst,
- einer Zustandseinheit (20) zum Bestimmen eines aktuellen Zustands (Z0) des Weltmodells (12),
- einer Planungseinheit (30) zum Planen einer Sequenz (S) von Aktionen (A) aus einer Menge von bestimmten Aktionen (A) zum Erreichen eines bestimmten Wahrnehmungsziels (Z), wobei bei der Planung der Sequenz (S) die Planungseinheit (30) von dem aktuellen Zustand (Z0) des Weltmodells ausgeht, und
wobei die bestimmten Aktionen (A) der Menge ein Erfassen von Sensordaten, ein Verknüpfen von erfassten Sensordaten, von historischen Daten und/oder Weltmodelldaten zur Bereitstellung von verknüpften Daten, und ein Auswerten der verknüpften Daten umfassen,
- einer Simulationseinheit (40) zum Simulieren einer Ausführung der geplanten Sequenz (S) und
- eine Schnittstelle zu dem Wahrnehmungssystem vorgesehen ist, welche dazu eingerichtet ist, die geplante Sequenz (S) an das Wahrnehmungssystem zu übertragen und erfasste Sensordaten von dem Wahrnehmungssystem an das automatische Konfigurationssystem (1) zu übertragen.

2. Konfigurationssystem nach Anspruch 1,
**dadurch gekennzeichnet,**
**dass** die Planungseinheit (30) dazu eingerichtet ist, eine Anzahl von N Sequenzen (S) zu planen,
**dass** die Simulationseinheit (40) dazu eingerichtet ist, die Ausführung einer jeden der N geplanten Sequenzen (S) der Anzahl zu simulieren, und
**dass** eine Bewertungseinheit vorgesehen ist, welche dazu eingerichtet ist, einer jeden der N geplanten Sequenzen (S) der Anzahl in Abhängigkeit der simulierten Ausführung der jeweiligen Sequenz (S) und eines Erreichens des bestimmten Wahrnehmungsziels (Z) eine Bewertung zuzuordnen.

3. Konfigurationssystem nach Anspruch 2,
**dadurch gekennzeichnet,**
**dass** die Bewertungseinheit dazu eingerichtet ist, in Abhängigkeit eines vorgegebenen Kriteriums und der der jeweiligen Sequenz (S) zugeordneten Bewertung eine Sequenz (S) aus den N geplanten Sequenzen (S) der Anzahl auszuwählen.

4. Konfigurationssystem nach einem der Ansprüche 2 oder 3,
**dadurch gekennzeichnet,**
**dass** die Simulationseinheit (40) dazu eingerichtet ist, die Ausführung mehrerer der N geplanten Sequenzen (S) der Anzahl parallel zu simulieren.

5. Konfigurationssystem nach einem der Ansprüche 2 - 4,
**dadurch gekennzeichnet,**
**dass** die Planungseinheit (30) dazu eingerichtet ist, die Anzahl von N Sequenzen (S) parallel zu planen.

6. Konfigurationssystem nach einem der Ansprüche 1 - 5,
**dadurch gekennzeichnet,**
**dass** die Planungseinheit (30) dazu eingerichtet ist, jede mögliche Sequenz (S) von Aktionen (A) aus der Menge der bestimmten Aktionen (A) zu planen.

7. Konfigurationssystem nach einem der Ansprüche 1 - 6,
**dadurch gekennzeichnet,**
**dass** die geplante Sequenz (S) höchstens eine Anzahl von M Aktionen (A) umfasst.

8. Konfigurationssystem nach Anspruch 2,
**dadurch gekennzeichnet,**
**dass** die Planungseinheit (30) dazu eingerichtet ist, das bestimmte Wahrnehmungsziel (Z) in eine Anzahl von Teilzielen zu unterteilen und für jedes der Teilziele der Anzahl zumindest eine Teilsequenz von Aktionen (A) der Anzahl der bestimmten Aktionen (A) zu planen, wobei die Simulationseinheit (40) zum Simulieren der Ausführung einer jeden geplanten Teilsequenz der Anzahl der Teilziele eingerichtet ist, und
wobei die Bewertungseinheit dazu eingerichtet ist, einer jeden geplanten Teilsequenz der Anzahl in Abhängigkeit der simulierten Ausführung der jeweiligen geplanten Teilsequenz und eines Erreichens des Teilziels eine Bewertung zuzuordnen.

9. Konfigurationssystem nach Anspruch 8,
**dadurch gekennzeichnet,**
**dass** die Bewertungseinheit dazu eingerichtet ist, für ein jedes Teilziel der Anzahl in Abhängigkeit eines spezifischen Teilziel-Kriteriums und der der jeweiligen Teilsequenz zugeordneten Bewertung eine Teilsequenz aus den geplanten Teilsequenzen auszuwählen, wobei die Planungseinheit (30) dazu eingerichtet ist, die Sequenz zum Erreichen des Wahrnehmungsziels (Z) mittels Verknüpfung der ausgewählten Teilsequenzen zu planen.

10. Konfigurationssystem nach einem der Ansprüche 2 - 9,
**dadurch gekennzeichnet,**
**dass** eine Lerneinheit vorgesehen ist, die dazu eingerichtet ist, in Abhängigkeit der geplanten Sequenz (S) und der zugeordneten Bewertung eine neue Aktion zu erzeugen.

11. Konfigurationssystem nach einem der Ansprüche 8 - 9,
**dadurch gekennzeichnet, dass** eine Lerneinheit vorgesehen ist,
die dazu eingerichtet ist, in Abhängigkeit der geplanten Teilsequenz und der zugeordneten Bewertung eine neue Aktion zu erzeugen.

12. Konfigurationssystem nach einem der Ansprüche 1 - 11,
**dadurch gekennzeichnet,**
**dass** das bestimmte Wahrnehmungsziel (Z) ein Ermitteln einer Pose eines Objekts in dem Weltmodell mit einer bestimmten Genauigkeit, ein Klassifizieren des Objekts, ein Bestimmen einer Unsicherheit eines Sensors des Wahrnehmungssystems und/oder ein Bestimmen einer Unsicherheit eines Auswertealgorithmus umfasst.

13. Autonomes System mit einem Wahrnehmungssystem mit zumindest einem Sensor und mit einem automatischen Konfigurationssystem (1) nach einem der Ansprüche 1 - 12.

14. Verfahren zum Betreiben eines automatischen Konfigurationssystem (1) für ein Wahrnehmungssystem, mit:
- Bereitstellen (S1) eines Weltmodells (12) umfassend ein semantisches Datenmodell des Wahrnehmungssystems und eine Beschreibung eines Bereichs, wobei der Bereich das Wahrnehmungssystem und eine Umgebung des Wahrnehmungssystems umfasst,
- Bestimmen (S2) eines aktuellen Zustands des Weltmodells (12),
- Planen (S3) einer Sequenz (S) von Aktionen (A) aus einer Menge von bestimmten Aktionen (A) zum Erreichen eines bestimmten Wahrnehmungsziels (Z), wobei das Planen der Sequenz (S) von dem aktuellen Zustand (Z0) des Weltmodells ausgeht, und
wobei die bestimmten Aktionen (A) der Menge ein Erfassen von Sensordaten, ein Verknüpfen von erfassten Sensordaten, von historischen Daten und/oder Weltmodelldaten zur Bereitstellung von verknüpften Daten, und ein Auswerten der verknüpften Daten umfassen,
- Simulieren (S4) einer Ausführung der geplanten Sequenz (S)
- Vorsehen einer Schnittstelle zu dem Wahrnehmungssystem,
welche dazu eingerichtet ist, die geplante Sequenz (S) an das Wahrnehmungssystem zu übertragen und erfasste Sensordaten von dem Wahrnehmungssystem an das automatische Konfigurationssystem (1) zu übertragen.

15. Computerprogrammprodukt, welches auf einer programmgesteuerten Einrichtung die Durchführung des Verfahrens nach Anspruch 14 veranlasst.

## Claims

1. Automatic configuration system (1) for a perception system, comprising:
- a modelling unit (10) for providing a world model (12) comprising a semantic data model of the perception system and a description of a region, wherein the region comprises the perception system and an environment of the perception system,
- a state unit (20) for determining a current state (Z0) of the world model (12),
- a planning unit (30) for planning a sequence (S) of actions (A) from a set of specific actions (A) for achieving a specific perception aim (Z), wherein the planning unit (30) proceeds from the current state (Z0) of the world model when planning the sequence (S), and wherein the specific actions (A) of the set comprise capturing sensor data, combining captured sensor data, historical data and/or world model data in order to provide combined data, and evaluating the combined data,
- a simulation unit (40) for simulating execution of the planned sequence (S), and
- an interface to the perception system is provided, which is designed to transfer the planned sequence (S) to the perception system and to transfer captured sensor data from the perception system to the automatic configuration system (1).

2. Configuration system according to Claim 1,
**characterized**
**in that** the planning unit (30) is designed to plan a number of N sequences (S),
**in that** the simulation unit (40) is designed to simulate the execution of each of the N planned sequences (S) of the number, and
**in that** a rating unit is provided, which is designed to assign a rating to each of the N planned sequences (S) of the number depending on the simulated execution of the respective sequence (S) and achievement of the specific perception aim (Z).

3. Configuration system according to Claim 2,
**characterized**
**in that** the rating unit is designed to select a sequence (S) from the N planned sequences (S) of the number depending on a predefined criterion and the rating assigned to the respective sequence (S).

4. Configuration system according to either of Claims 2 and 3,
**characterized**
**in that** the simulation unit (40) is designed to simulate the execution of a plurality of the N planned sequences (S) of the number in parallel.

5. Configuration system according to any of Claims 2 - 4,
**characterized**
**in that** the planning unit (30) is designed to plan the number of N sequences (S) in parallel.

6. Configuration system according to any of Claims 1 - 5,
**characterized**
**in that** the planning unit (30) is designed to plan every possible sequence (S) of actions (A) from the set of specific actions (A) .

7. Configuration system according to any of Claims 1 - 6,
**characterized**
**in that** the planned sequence (S) comprises at most a number of M actions (A).

8. Configuration system according to Claim 2,
**characterized**
**in that** the planning unit (30) is designed to subdivide the specific perception aim (Z) into a number of partial aims and, for each of the partial aims of the number, to plan at least one partial sequence of actions (A) of the number of specific actions (A), wherein the simulation unit (40) is designed for simulating the execution of each planned partial sequence of the number of partial aims, and
wherein the rating unit is designed to assign a rating to each planned partial sequence of the number depending on the simulated execution of the respective planned partial sequence and achievement of the partial aim.

9. Configuration system according to Claim 8,
**characterized**
**in that** the rating unit is designed to select a partial sequence from the planned partial sequences for each partial aim of the number depending on a specific partial aim criterion and the rating assigned to the respective partial sequence, wherein the planning unit (30) is designed to plan the sequence for achieving the perception aim (Z) by means of combining the selected partial sequences.

10. Configuration system according to any of Claims 2 - 9,
**characterized**
**in that** a learning unit is provided, which is designed to generate a new action depending on the planned sequence (S) and the assigned rating.

11. Configuration system according to either of Claims 8 - 9,
**characterized in that** a learning unit is provided, which is designed to generate a new action depending on the planned partial sequence and the assigned rating.

12. Configuration system according to any of Claims 1 - 11,
**characterized**
**in that** the specific perception aim (Z) comprises ascertaining a pose of an object in the world model with a specific accuracy, classifying the object, determining an uncertainty of a sensor of the perception system and/or determining an uncertainty of an evaluation algorithm.

13. Autonomous system comprising a perception system comprising at least one sensor and comprising an automatic configuration system (1) according to any of Claims 1 - 12.

14. Method for operating an automatic configuration system (1) for a perception system, comprising:
- providing (S1) a world model (12) comprising a semantic data model of the perception system and a description of a region, wherein the region comprises the perception system and an environment of the perception system,
- determining (S2) a current state of the world model (12),
- planning (S3) a sequence (S) of actions (A) from a set of specific actions (A) for achieving a specific perception aim (Z), wherein planning the sequence (S) proceeds from the current state (Z0) of the world model, and wherein the specific actions (A) of the set comprise capturing sensor data, combining captured sensor data, historical data and/or world model data in order to provide combined data, and evaluating the combined data,
- simulating (S4) an execution of the planned sequence (S),
- providing an interface to the perception system, which is designed to transfer the planned sequence (S) to the perception system and to transfer captured sensor data from the perception system to the automatic configuration system (1).

15. Computer program product which causes the method according to Claim 14 to be carried out on a program-controlled device.

## Revendications

1. Système de configuration automatique (1) d'un système de perception, avec :
- une unité de modélisation (10) pour mettre à disposition un modèle mondial (12) qui comprend un modèle de données sémantique du système de perception et une description d'un domaine, le domaine comprenant le système de perception et un environnement du système de perception,
- une unité d'état (20) pour déterminer un état actuel (Z0) du modèle mondial (12),
- une unité de planification (30) pour planifier une séquence (S) d'actions (A) d'une multitude d'actions déterminées (A) pour atteindre un objectif de perception déterminé (Z), dans lequel lors de la planification de la séquence (S), l'unité de planification (30) part de l'état actuel (Z0) du modèle mondial, et
dans lequel les actions déterminées (A) de la multitude comprennent une collecte de données de capteur, une combinaison de données de capteur collectées, de données historiques et/ou de données de modèle mondial pour la mise à disposition de données combinées, et une évaluation des données combinées,
- une unité de simulation (40) pour simuler une exécution de la séquence (S) planifiée et
- une interface vers le système de perception est prévue, laquelle est conçue pour transmettre la séquence (S) planifiée au système de perception et pour transmettre des données de capteur collectées du système de perception au système de configuration automatique (1).

2. Système de configuration selon la revendication 1, **caractérisé en ce que** l'unité de planification (30) est conçue pour planifier un nombre de N séquences (S),
**en ce que** l'unité de simulation (40) est conçue pour simuler l'exécution de chacune des N séquences (S) planifiées du nombre, et
**en ce qu'**une unité d'évaluation est prévue, laquelle est conçue pour attribuer une évaluation à chacune des N séquences (S) planifiées du nombre en fonction de l'exécution simulée de la séquence (S) respective et de la réalisation de l'objectif de perception déterminé (Z).

3. Système de configuration selon la revendication 2, **caractérisé en ce que** l'unité d'évaluation est conçue pour sélectionner une séquence (S) à partir des N séquences (S) planifiées du nombre en fonction d'un critère prédéfini et de l'évaluation attribuée à la séquence (S) respective.

4. Système de configuration selon l'une des revendications 2 ou 3, **caractérisé en ce que** l'unité de simulation (40) est conçue pour simuler parallèlement l'exécution de plusieurs des N séquences (S) planifiées du nombre.

5. Système de configuration selon l'une des revendications 2 à 4, **caractérisé en ce que** l'unité de planification (30) est conçue pour planifier parallèlement le nombre de N séquences (S) .

6. Système de configuration selon l'une des revendications 1 à 5, **caractérisé en ce que** l'unité de planification (30) est conçue pour planifier chaque séquence (S) possible d'actions (A) à partir de la multitude des actions déterminées (A).

7. Système de configuration selon l'une des revendications 1 à 6, **caractérisé en ce que** la séquence (S) planifiée comprend au maximum un nombre de M actions (A).

8. Système de configuration selon la revendication 2, **caractérisé en ce que** l'unité de planification (30) est conçue pour subdiviser l'objectif de perception déterminé (Z) en un nombre d'objectifs partiels et pour planifier pour chacun des objectifs partiels du nombre au moins une séquence partielle d'actions (A) du nombre des actions déterminées (A), dans lequel l'unité de simulation (40) est conçue pour simuler l'exécution de chaque séquence partielle planifiée du nombre des objectifs partiels, et
dans lequel l'unité d'évaluation est conçue pour attribuer une évaluation à chaque séquence partielle planifiée du nombre en fonction de l'exécution simulée de la séquence partielle planifiée respective et de la réalisation de l'objectif partiel.

9. Système de configuration selon la revendication 8, **caractérisé en ce que** l'unité d'évaluation est conçue pour sélectionner une séquence partielle à partir des séquences partielles planifiées pour chaque objectif partiel du nombre en fonction d'un critère spécifique d'objectif partiel et de l'évaluation attribuée à la séquence partielle respective, dans lequel l'unité de planification (30) est conçue pour planifier la séquence de réalisation de l'objectif de perception (Z) au moyen de la combinaison des séquences partielles sélectionnées.

10. Système de configuration selon l'une des revendications 2 à 9, **caractérisé en ce qu'**une unité d'apprentissage est prévue qui est conçue pour produire une nouvelle action en fonction de la séquence (S) planifiée et de l'évaluation attribuée.

11. Système de configuration selon l'une des revendications 8 à 9, **caractérisé en ce qu'**une unité d'apprentissage est prévue qui est conçue pour produire une nouvelle action en fonction de la séquence partielle planifiée et de l'évaluation attribuée.

12. Système de configuration selon l'une des revendications 1 à 11, **caractérisé en ce que** l'objectif de perception déterminé (Z) comprend une détermination d'une position d'un objet dans le modèle mondial avec une certaine précision, une classification de l'objet, une détermination d'une incertitude d'un capteur du système de perception et/ou une détermination d'une incertitude d'un algorithme d'évaluation.

13. Système autonome avec un système de perception avec au moins un capteur et avec un système de configuration automatique (1) selon l'une des revendications 1 à 12.

14. Procédé d'exploitation d'un système de configuration automatique (1) pour un système de perception, avec :
- la mise à disposition (S1) d'un modèle mondial (12) comprenant un modèle de données sémantique du système de perception et une description d'un domaine, dans lequel le domaine comprend le système de perception et un environnement du système de perception,
- la détermination (S2) d'un état actuel du modèle mondial (12),
- la planification (S3) d'une séquence (S) d'actions (A) parmi une multitude d'actions déterminées (A) pour réaliser un objectif de perception déterminé (Z), dans lequel la planification de la séquence (S) part de l'état actuel (Z0) du modèle mondial, et
dans lequel les actions déterminées (A) de la multitude comprennent une collecte de données de capteur, une combinaison de données de capteur collectées, de données historiques et/ou de données de modèle mondial pour la mise à disposition de données combinées, et une évaluation des données combinées,
- la simulation (S4) d'une exécution de la séquence (S) planifiée
- la fourniture d'une interface vers le système de perception est prévue, laquelle est conçue pour transmettre la séquence (S) planifiée au système de perception et pour transmettre des données de capteur collectées du système de perception au système de configuration automatique (1).

15. Produit de programme informatique qui donne lieu à l'exécution du procédé selon la revendication 14 sur un dispositif commandé par programme.
